# FASCICULE DE BREVET EUROPEEN

(11) **EP 2 318 219 B1**
(45) Date de publication et mention de la délivrance du brevet: **04.04.2012**
(21) Numéro de dépôt: 09809306.5
(22) Date de dépôt: 06.08.2009
(51) Int. Cl.: B60C 11/03

(54) **BANDE DE ROULEMENT DE PNEU A SCULPTURE DIRECTIONNELLE**
REIFENLAUFFLÄCHE MIT LAUFRICHTUNGSGEBUNDENEM PROFIL
TYRE TREAD WITH DIRECTIONAL PATTERN

(30) Priorité: 26.08.2008 FR 0855712
(43) Date de publication de la demande: 11.05.2011
(73) Titulaire: Société de Technologie MICHELIN, 63000 Clermont-Ferrand (FR); MICHELIN Recherche et Technique S.A., 1763 Granges-Paccot (CH)
(72) Inventeur: BONNAMOUR, Matthieu, F-63430 Pont du Château (FR); FUGIER, Sébastien, F-63200 Saint Bonnet près Riom (FR); PINEAU, Jacky, F-63112 Blanzat (FR)
(74) Mandataire: Diernaz, Christian
(86) Numéro de dépôt international: PCT/EP2009/060222
(87) Numéro de publication internationale: WO 2010/023076

(56) Documents cités:
- EP-A- 0 893 283
- EP-A- 0 916 524
- EP-A- 1 437 237
- EP-A- 1 637 357
- US-A- 5 234 042

## Description

La présente invention concerne les pneus pour véhicules de tourisme et plus particulièrement les bandes de roulement dont sont pourvues lesdits pneus, et encore plus particulièrement, les pneus destinés à être montés sur des véhicules à hautes performances.

Il est connu de former des sculptures de bande de roulement de manière à conférer à ladite bande de roulement un caractère directionnel. Un pneu directionnel comprend une bande de roulement ayant une sculpture directionnelle telle que, lorsqu'on fait tourner le pneu dans le sens préférentiel, ce pneu offre des propriétés d'adhérence au sol meilleures que celles offertes lorsqu'on le fait tourner dans l'autre sens. Par sculpture d'une bande de roulement, on entend une pluralité de découpures réalisées dans ladite bande suivant un dessin approprié, lesdites découpures ayant des largeurs et profondeurs également appropriées. Par découpures on entend soit des rainures soit des incisions, ces dernières (incisions) se distinguant des premières par des largeurs (distance entre les faces en vis-à-vis) généralement inférieures à 2 mm et encore plus préférentiellement inférieur à 1 mm).

Une sculpture directionnelle de bande usuelle présente des rainures principales qui sont disposées de manière à constituer une série de rainures en V pointant toutes dans la même direction tout autour de la bande de roulement du pneu. Habituellement, pour une adhérence au sol maximale au cours de l'accélération des véhicules à hautes performances, les rainures en forme de V pointent dans la direction du déplacement, si bien que la partie médiane (proche du plan médian du pneu) de chaque rainure en forme de V se présente la première sur l'empreinte du pneu au sol.

Des exemples de ce genre de pneus sont présentés dans la demande de brevet EP-A-1637357 ou dans les brevets européens 064934, 0721853, 1238827 ou dans le brevet US 4057089.

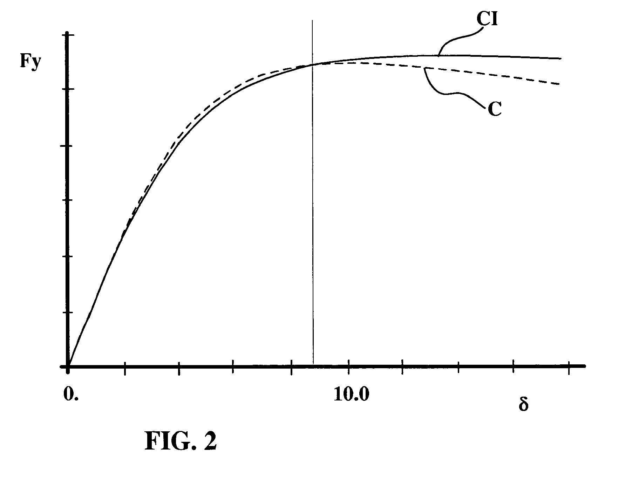

Si ces sculptures présentent un avantage certain en roulage sur chaussée revêtue d'eau, on observe que ce type de sculpture peut présenter des inconvénients lors de tests de comportement routier sur chaussée sèche lorsqu'on se place aux limites d'adhérence en virage notamment. En effet, la courbe de poussée transversale en fonction de l'angle de dérive d'un tel pneumatique présente une allure caractéristique montrant une augmentation de ladite poussée transversale jusqu'à un maximum suivi par une diminution sensible de poussée transversale pour des fortes dérives (un exemple d'une telle courbe est montrée avec la courbe repérée C0 sur la figure 2 du présent document).

Aux fortes accélérations, et pour certaines manoeuvres spécifiques telles que du "surbraquage" ou braquage en limite d'adhérence pour des accélérations latérales supérieures à 0.8 fois l'accélération de la pesanteur, cela peut se traduire par une dégradation de l'équilibre du véhicule équipé de pneus pourvus de telles sculptures.

Le document de brevet EP0721853 montre une variante d'une telle sculpture selon laquelle, une pluralité de rainures additionnelles ont été introduites. Certaines de ces rainures additionnelles sont formées pour relier deux à deux les rainures principales situées sur un même côté de la bande de roulement par rapport au plan médian. D'autres rainures additionnelles sont formées pour relier deux à deux les rainures principales situées de part et d'autre du plan médian. Par rainure reliée à une autre rainure, il faut comprendre qu'une rainure additionnelle débouche à ses extrémités dans des rainures principales.

Ces rainures additionnelles sont ici orientées de manières à être sensiblement perpendiculaires aux rainures principales qu'elles relient. Entre deux rainures principales, une première rainure additionnelle est formée entre l'extrémité axialement à l'intérieur d'une rainure principale et une deuxième rainure principale de manière à être sensiblement perpendiculaire à la deuxième rainure principale. Cette première rainure additionnelle forme avec la direction circonférentielle un angle voisin de 45 degrés. Une deuxième rainure additionnelle est formée axialement à l'extérieur de cette première rainure additionnelle. Selon cet art antérieur, les rainures principales et les premières rainures additionnelles délimitent une pluralité d'éléments discontinus dans la direction circonférentielle dont certaines des arêtes sont soumises à de fortes surpressions pendant les manoeuvres de braquage (c'est-à-dire notamment sous fortes accélérations transversales). Les rainures additionnelles de cet art antérieur sont défavorables d'un point de vue rigidité transversale : en effet, lorsque cette bande est soumise à un effort transversal notamment en manoeuvre de braquage, on constate une perte sensible de rigidité provoquant une diminution de la poussée de dérive.

Un objectif de l'invention est de proposer une sculpture pour bande de roulement de pneu équipant véhicule de tourisme ne présentant pas les inconvénients rappelés plus haut et en particulier ne montrant pas de, chute sensible de la poussée de dérive à forte sollicitations transversales (en virage).

A cet effet, l'invention a pour objet une bande de roulement pour pneu, telle que définie dans les revendications 1 et 5, pourvue d'une sculpture comprenant une pluralité de rainures principales formées sur chaque moitié de la bande de roulement de part et d'autre plan médian, chacune de ces rainures principales de largeur moyenne L s'ouvrant axialement à l'extérieur de la bande et se prolongeant axialement à l'intérieur jusqu'à une distance du plan médian de la bande comprise entre 2.5 et 10% de la largeur TW de la bande de roulement. Ces rainures principales forment un motif de forme générale en V conférant à cette bande de roulement un sens de roulement préférentiel tel que l'extrémité axialement la plus à l'intérieur de chaque rainure principale rentre dans le contact avec la chaussée avant l'extrémité axialement la plus à l'extérieur de la même rainure principale.

Il est en outre prévu une pluralité de rainures additionnelles de largeur 1 inférieure à la largeur moyenne L des rainures principales et comprenant une première et une seconde extrémités, la direction moyenne reliant les première et seconde extrémités formant avec la direction circonférentielle un angle A faible, c'est-à-dire au plus égal à 20 degrés et supérieur à zéro degré, la seconde extrémité étant située à une distance D2 du plan médian qui est supérieure à la distance D1 séparant du même plan la première extrémité, au moins la première ou la seconde extrémité étant ouverte sur une rainure principale. En outre, l'extrémité axialement intérieure de chaque rainure additionnelle - c'est-à-dire la plus proche dudit plan - est à une distance D1 du plan équatorial qui est supérieure à la distance par rapport au même plan des premières extrémités des rainures principales et inférieure à 18% de la largeur TW de la bande.

Cette bande de roulement est telle que sur chaque rainure principale débouche au moins une rainure additionnelle et en ce que l'extrémité axialement la plus à l'intérieur de chaque rainure additionnelle rentre dans le contact avec la chaussée avant l'extrémité axialement la plus à l'extérieur de la même rainure additionnelle.

La bande de roulement selon l'invention comprend donc une partie médiane qui s'étend dans la direction circonférentielle et dont les bords axialement opposés délimitent une pluralité d'épis qui confèrent à la bande de roulement de bonnes performances à la fois sur chaussée mouillée et sur chaussée sèche. En limitant le domaine dans lequel est choisi l'angle des rainures additionnelles, il est possible de réaliser, le long des arêtes du motif continu central et en particulier sur les épis, une homogénéisation des pressions de contact avec le sol, ces pressions résultant du fort cisaillement transversal de la sculpture dans certaines conditions de roulage.

De plus, la partie médiane de la bande située de part et d'autre du plan médian et qui est délimitée par les rainures principales et les rainures additionnelles a une rigidité en sollicitation de cisaillement transversal qui est égale ou sensiblement égale (c'est-à-dire très peu différente) de celle d'une partie de même géométrie et dépourvu de toute découpure (rainure, incision) de manière à pouvoir réaliser un transfert en totalité des efforts d'un côté de cette partie à l'autre côté dans le sens axial. Cette partie médiane est notamment dépourvue de rainure circonférentielle. Grâce à une bande de roulement selon l'invention il est possible d'obtenir un fonctionnement homogène de ladite bande et notamment une répartition quasiment homogène des pressions de contact sur cette partie médiane en évitant des mécanismes de basculement des éléments de matière dans cette partie médiane.

Dans une variante de l'invention, les rainures additionnelles ne s'ouvrent sur les rainures principales que par une extrémité, l'autre extrémité étant distante d'une autre rainure principale d'une distance inférieure à 50% de la distance moyenne entre deux rainures principales mesurée suivant la direction de la rainure additionnelle (et encore plus préférentiellement inférieure à 25% de ladite distance).

Dans une autre variante, chaque rainure additionnelle s'ouvre à ses deux extrémités dans des rainures principales sur une même moitié de bande de roulement.

La présence des rainures additionnelles selon l'invention permet d'améliorer l'allure des courbes de poussée du pneumatique en fonction de l'angle de dérive et, par conséquent, d'améliorer l'équilibre du véhicule lors de manoeuvres spécifiques sous très fortes accélérations transversales.

Préférentiellement les rainures additionnelles ont une largeur moyenne au moins égale à 1.5 mm et au plus égale à 4 mm.

Selon une variante de l'invention, la pluralité des rainures principales formées sur une moitié de la bande de roulement est décalée circonférentiellement par rapport à la pluralité des rainures principales formées sur l'autre moitié de la bande de roulement.

Selon une variante de l'invention, il est avantageux que des deuxièmes rainures additionnelles relient les rainures principales deux à deux, ces deuxièmes rainures additionnelles étant sensiblement parallèles aux premières rainures additionnelles et situées à une distance du plan équatorial compris entre 27 et 37% de la largeur TW de la bande de roulement. Par sensiblement parallèles, on entend ici que les rainures additionnelles d'un même côté de la bande présentent entre elles un écart angulaire nul ou pouvant aller jusqu'à 5 degrés.

Il est également avantageux que les profondeurs des premières et deuxièmes rainures additionnelles soient au moins égales à 50% de la profondeur des rainures principales.

La suite de la description explicite l'invention et fait ressortir d'autres caractéristiques et avantages de l'invention, à partir de variantes de l'invention données à titre d'exemples non limitatifs et montrées à l'aide des figures suivantes :

- la figure 1 montre une vue partielle en élévation d'une bande de roulement selon l'invention,

- la figure 2 montre les courbes enregistrées des poussées de dérive d'un pneu selon l'invention et d'un pneu selon l'art antérieur,

- la figure 3 montre une vue partielle en élévation d'une bande de roulement selon une variante de l'invention.

- la figure 4 montre une vue partielle en élévation d'une bande de roulement selon une autre variante de l'invention.

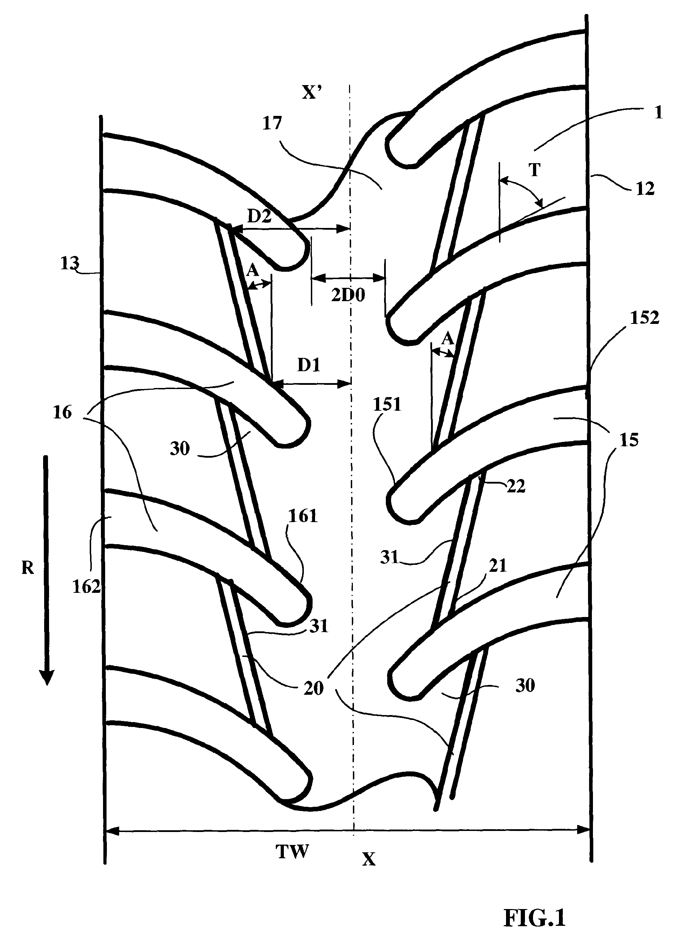

Si l'on considère la figure 1, on y voit une vue partielle en élévation d'une partie d'une bande de roulement pour un pneumatique pour véhicule de tourisme de dimension 195/65 R 15. Ce pneu à armature de carcasse radiale comprend une bande de roulement 1 venant en contact du sol, cette bande comportant deux bords latéraux 12 et 13 espacés l'une de l'autre d'une largeur de bande de roulement TW. Les bords latéraux 12 et 13 correspondent aux points axialement les plus à l'extérieur de la bande de roulement venant en contact avec la chaussée, le pneu étant soumis à des conditions de pression et charge nominales.

Dans le cadre de la présente invention, on définit la largeur de bande de roulement TW comme étant la plus grande distance axiale du pneu, mesurée à partir de l'empreinte au sol du pneu lorsque celui-ci est monté sur une jante donnée et est gonflé à une pression d'usage sous une charge nominale ; les termes "axial" et "dans le sens axial" se réfèrent à des distances prises le long de l'axe de rotation du pneu ou parallèlement à celui-ci.

La bande de roulement 1 se prolonge au delà de ses bords latéraux 12 et 13 par des flancs jusqu'à des bourrelets.

Le pneu pourvu d'une telle bande présente un plan circonférentiel médian (dit plan médian X-X') qui est perpendiculaire à l'axe de rotation du pneu et est localisé à mi-distance entre les bord latéraux 12 et 13 de la bande de roulement 1. La bande de roulement est pourvue sur sa surface radialement externe avec une sculpture directionnelle formée de rainures principales 15 et 16 disposées sur chaque moitié de la bande de roulement (c'est-à-dire sur chaque partie de la bande de roulement de part et d'autre du plan médian X-X'). La direction de rotation est indiquée par une flèche R sur les dessins (ce même type de marquage peut être employé sur le pneu pourvu de cette bande pour indiquer la direction de roulage préconisée afin d'avoir tous les avantages de l'invention). Les rainures principales 15 et 16 s'étendent à partir d'une partie circonférentielle médiane 17 qui est disposée de manière symétrique de part et d'autre du plan médian X-X', en direction d'un bord latéral correspondant 12 ou 13. Par partie circonférentielle médiane de la bande de roulement, on entend une partie s'étendant jusqu'à au plus 28% de la largeur de bande TW sur chaque côté du plan médian X-X'.

Chaque rainure principale 15 (respectivement 16) comprend une première extrémité 151 (respectivement 161) et une seconde extrémité 152 (respectivement 162). Les premières extrémités 151, 161 sont situées dans la partie circonférentielle médiane 17 sans pour autant être situées sur le plan médian X-X'. Dans le cas présent, la distance axiale D0 entre chacune de ces premières extrémités et le plan médian X-X' est égale à 4% de la largeur TW de la bande de roulement (dans l'exemple montré, les distances des premières extrémités des rainures principales des deux moitiés de la bande sont égales).

Les secondes extrémités 152, 162 des rainures principales s'ouvrent sur les bords latéraux 12, 13 de la bande de roulement.

Les rainures principales 15, 16 ont des largeurs moyennes allant de 5 mm à 8.5 mm et une profondeur moyenne égale à 8.5 mm et sont disposées de manière à générer globalement un dessin en forme de **V ;** la pointe de ce **V** indiquant le sens de rotation préférentiel choisi pour cette sculpture. La forme géométrique de chaque rainure principale est telle que l'angle **T** de la tangente aux arêtes formées sur la bande de roulement par ces rainures principales avec une direction contenue dans le plan médian X-X' augmente avec la distance entre le point de tangence considéré et ledit plan. Par ailleurs et comme cela est visible sur cette figure 1, les rainures principales 15 d'une moitié de bande de roulement sont décalées dans le sens circonférentiel par rapport aux rainures principales 16 de l'autre moitié. Le décalage est sensiblement égal à la moitié de la distance existant entre des rainures principales adjacentes sur une même moitié de bande de roulement. Dans une autre variante non montrée ici, les rainures principales peuvent ne pas être décalées circonférentiellement les unes par rapport aux autres.

En outre, cette sculpture comprend sur chaque moitié de bande de roulement et entièrement contenues dans la partie circonférentielle médiane 17, une pluralité de rainures additionnelles 20 de largeur égale à 3 mm et d'orientation moyenne A égale dans le cas présent à 4 degrés, cette orientation étant mesurée par rapport à une direction tangente à la direction circonférentielle. Chaque rainure additionnelle 20 comprend une première extrémité 21 et une seconde extrémité 22, la première extrémité 21 étant située à une distance axiale D1 du plan médian X-X' qui est égale dans le cas présent à 13% de la largeur TW de la bande de roulement, la seconde extrémité 22 étant située à une distance axiale D2 du plan médian X-X' qui est égale à 14 % de la largeur TW de la bande de roulement. Dans cette variante, chaque rainure additionnelle 20 débouche à ses deux extrémités dans des rainures principales 15, 16 consécutives d'une même moitié de bande de roulement. Préférentiellement, l'angle A des rainures additionnelles avec la direction circonférentielle est faible c'est-à-dire supérieur à zéro degré et au plus égal à 20 degrés ; encore plus préférentiellement, l'angle A est au moins égal à 4 degrés et au plus à 15 degrés.

La présence de ces rainures additionnelles 20 localisées de façon précise comme cela vient d'être spécifié, créé des arêtes additionnelles qui sont faiblement orientées par rapport à une direction circonférentielle et dans un sens qui est le même que celui des branches du V formé par les rainures principales (c'est-à-dire que ces arêtes virtuellement prolongées forment un V de même orientation que le V formé par les rainures principales).

Par cette judicieuse disposition, il est possible de créer un élément médian continu 17 pourvu sur ces faces latérales d'une pluralité d'épis 30 présentant une géométrie spécifique particulièrement efficace dans les sollicitations de forte dérive (c'est-à-dire pour des angles de dérive au delà du maximum de poussée). Ces épis 30 ont une arête latérale 31 qui est inclinée d'un angle **A** ce qui permet de reprendre les efforts transversaux sous forte accélération latérale, et ainsi de créer un champ de pression quasiment constant et homogène notamment le long de ladite arête latérale 31. Par ailleurs, la présence des rainures additionnelles 20 occasionne un découplage entre la partie circonférentielle médiane 17 de la bande de roulement et les éléments de la bande axialement à l'extérieur desdites rainures additionnelles (effet d'articulation). L'absence de rainure dans la partie circonférentielle médiane continue 17 contribue à maintenir un bon appui sur le sol et par là à assurer un transfert efficace des efforts axiaux exercés par le sol.

Grâce à ces dispositions, on constate que la courbe donnant la force de poussée transversale du pneu sur le sol en fonction de l'angle de dérive du pneu (angle du plan du pneu par rapport à la trajectoire suivie) et pour des angles de dérive importants (au delà de la valeur maximale de réaction) la force de poussée subit une moindre diminution que pour les sculptures connues. Pendant les phases de sollicitations transversales à angles de dérive importants (c'est-à-dire au delà de l'angle de dérive correspondant à la valeur maximale de poussée), on constate le rôle primordial de la forme en épi du motif central, cette forme en épi jouant un rôle stabilisateur puisqu'il permet de maintenir le niveau maximal de poussée quel que soit l'angle de dérive adopté.

Si on adopte une inclinaison supérieure à la limite fixée, on constate que la courbe de poussée en fonction de l'angle de dérive subit à nouveau une diminution significative. On constate que le choix des paramètres de position et d'angles des rainures additionnelles est, de manière surprenante, essentiel pour obtenir l'effet recherché, à savoir la quasi conservation du niveau maximal de poussée aux très fortes dérives.

La figure 2 montre une comparaison des courbes de poussée transversale Fy enregistrées avec un pneu selon l'invention (courbe Ci) qui vient d'être décrit et un pneu selon l'art antérieur (courbe C), ce dernier étant identique au pneu de l'invention à la différence qu'il est pourvu de rainures additionnelles faisant un angle de 30 degrés avec une tangente à la direction circonférentielle. On constate que pour des valeurs d'angle de dérive δ supérieures à la dérive donnant les poussées maximales, alors que pour le pneu de l'art antérieur il se produit une perte sensible de la poussée transversale du sol sur le pneu, le pneu de l'invention enregistre une poussée de valeur quasi constante.

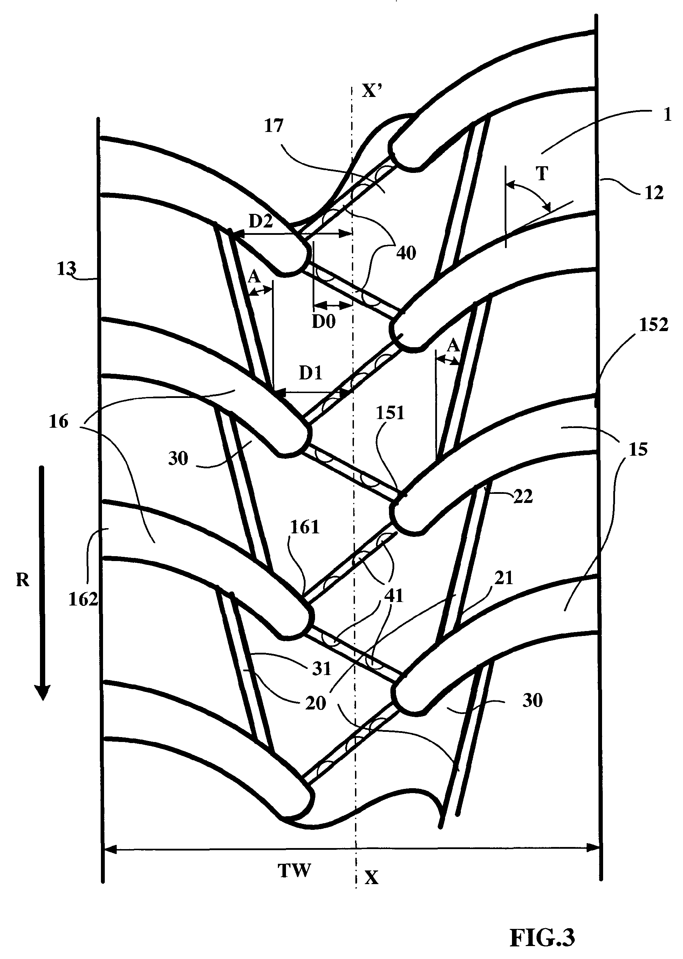

La variante selon l'invention qui vient d'être décrite avec le support de la figure 1 peut encore être améliorée en pourvoyant la partie circonférentielle médiane 17 avec une pluralité de rainures obliques 40 reliant les extrémités 151 des rainures principales 15 d'une moitié de bande de roulement aux extrémités 161 des rainures principales 16 sur l'autre moitié de bande de roulement comme cela est montré avec la figure 3. Bien entendu pour obtenir l'effet technique de l'invention, il est indispensable de pourvoir ces rainures obliques 40 avec des protubérances 41 qui empêchent la fermeture de ces rainures tout en transférant en totalité les efforts transversaux (parallèlement à l'axe de rotation) d'un côté de la partie centrale circonférentielle à l'autre côté de la même partie. Grâce au contact instantané ou quasi instantané entre lesdites faces lorsque des efforts transversaux sont générés par le sol sur la surface de roulement de la bande de roulement lors de manoeuvres de virage et lors de freinage sur sol sec, il est possible de conserver une grande rigidité transversale de la partie circonférentielle médiane 17 tout en bénéficiant d'arêtes additionnelles utiles notamment sur chaussée revêtue d'eau. Les protubérances sont disposées sur les parois délimitant les rainures obliques 40 de manière à être présentes quel que soit le niveau d'usure de la bande.

Préférentiellement, ces rainures obliques 40 ont des largeurs égales aux largeurs des rainures additionnelles 20 et elles ont une profondeur égale à la profondeur des rainures additionnelles.

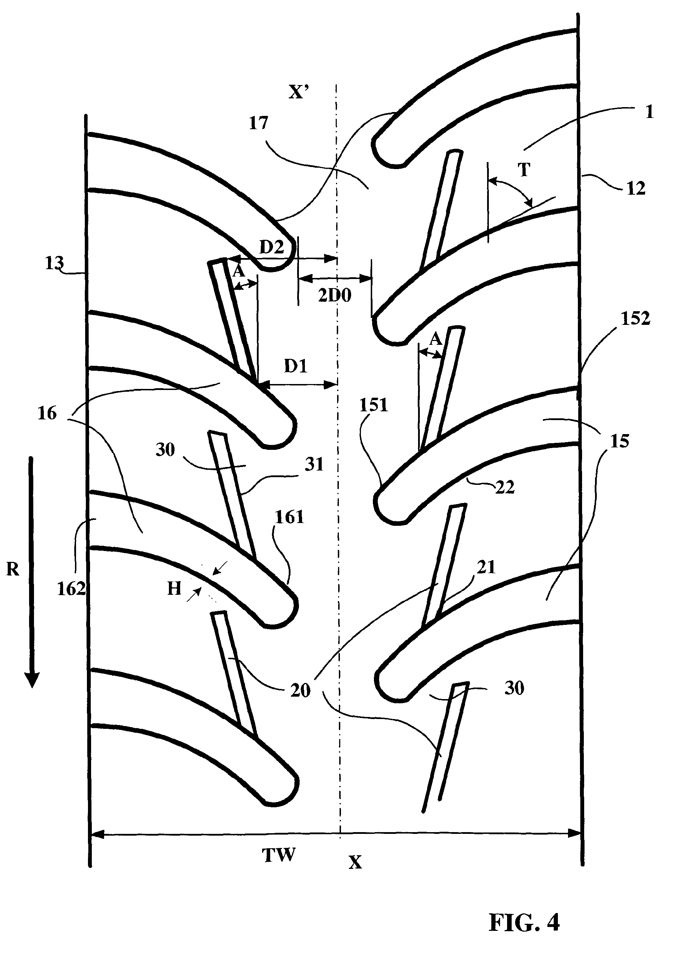

La figure 4 montre une variante de sculpture selon l'invention pour une bande de roulement équipant un pneu de même dimension que celle employée pour la figure 1. Par ailleurs les mêmes références sont utilisées pour désigner les mêmes éléments structurels. Dans cette variante, les rainures additionnelles 20 ne débouchent que par une première extrémité 21 dans une rainure principale 15 (ou 16). La distance H entre la seconde extrémité 22 et la rainure principale voisine est inférieure à 50% de la distance D3 mesurée entre deux rainures principales suivant la direction de la rainure additionnelle et dans la variante montrée cette distance H est égale à 20 % de la distance D3. Dans cette variante, la partie médiane de la bande de roulement est délimitée par les rainures principales et les rainures additionnelles, ces dernières étant prolongées virtuellement jusqu'à une autre rainure principale.

Au-delà des réalisations particulières qui ont été montrées et décrites pour illustrer l'invention, il est clair, pour la personne du métier, que l'on peut y apporter diverses modifications sans sortir de son cadre. C'est ainsi par exemple que l'on pourrait modifier la forme géométrique des rainures additionnelles pour leur donner une configuration curviligne et non plus rectiligne ou encore ajouter d'autres rainures additionnelles axialement à l'extérieur des premières rainures additionnelles. Il est également possible de disposer les rainures principales sur chaque moitié de bande de manière à ce que leurs extrémités axialement à l'intérieur ne soient pas toutes à la même distance du plan médian.

## Revendications

1. Bande de roulement pour pneu pourvue d'une sculpture comprenant une pluralité de rainures principales (15, 16) formées sur chaque moitié de la bande de roulement de part et d'autre d'un plan médian X-X', chacune de ces rainures principales (15, 16) de largeur moyenne L s'ouvrant axialement à l'extérieur et se prolongeant axialement à l'intérieur jusqu'à une distance du plan médian X-X' comprise entre 2.5 et 10% de la largeur TW de la bande de roulement, ces rainures principales formant un motif de forme générale en V conférant à cette bande de roulement un sens de roulement préférentiel tel que l'extrémité axialement la plus à l'intérieur de chaque rainure principale (15, 16) rentre dans le contact avec la chaussée avant l'extrémité axialement la plus à l'extérieur de la même rainure principale,
cette bande de roulement comprenant en outre une pluralité de rainures additionnelles (20), chacune de ces rainures additionnelles (20) ayant une largeur 1 inférieure à la largeur moyenne L des rainures principales et comprenant une première et une seconde extrémités (21, 22), les rainures additionnelles (20) débouchant à leurs deux extrémités (21, 22) dans des rainures principales,
la direction moyenne reliant les première et seconde extrémités des rainures additionnelles (20) formant avec la direction circonférentielle un angle A faible supérieur à zéro degré et au plus égal à 20 degrés, la seconde extrémité (22) étant située à une distance D2 du plan médian X-X' qui est supérieure à la distance D1 au même plan de la première extrémité (21), La première extrémité (21), c'est-à-dire l'extrémité axialement intérieure (21) de chaque rainure additionnelle (20) qui est la plus proche du plan médian X-X'; étant à une distance D1 du plan équatorial qui est supérieure à la distance D0 par rapport au même plan des premières extrémités des rainures principales, cette distance D1 étant inférieure à 18% de la largeur TW de la bande de roulement,
les rainures principales et les rainures additionnelles délimitant une partie médiane s'étendant dans la direction circonférentielle et ayant des bords axialement opposés délimitant une pluralité d'épis,
cette bande de roulement étant telle que sur chaque rainure principale (15, 16) débouche au moins une rainure additionnelle, l'extrémité axialement la plus à l'intérieur (21) de chaque rainure additionnelle (20) rentrant dans le contact avec la chaussée avant l'extrémité axialement la plus à l'extérieur (22) de la même rainure additionnelle,
cette bande de roulement étant **caractérisée en ce que** la partie médiane comprenant une pluralité d'épis est dépourvue de toute rainure circonférentielle.

2. Bande de roulement selon la revendication 1 **caractérisée en ce que** la pluralité des rainures principales (15) formées sur une moitié de la bande de roulement est décalée circonférentiellement par rapport à la pluralité des rainures principales (16) formées sur l'autre moitié de la bande de roulement.

3. Bande de roulement selon l'une des revendications 1 ou 2 **caractérisée en ce que** l'angle A des rainures additionnelles (20) avec la direction circonférentielle est au moins égal à 4 degrés et au plus égal à 15 degrés.

4. Bande de roulement selon l'une quelconque des revendications 1 à 3 **caractérisée en ce qu'**elle comprend en outre des rainures obliques (40) reliant les rainures principales (15) d'une moitié de bande de roulement aux rainures principales (16) de l'autre moitié de bande de roulement, chacune desdites rainures obliques (40) étant pourvues, sur les faces en vis-à-vis les délimitant, de protubérances (41) empêchant la fermeture desdites rainures en freinage.

5. Bande de roulement pour pneu pourvue d'une sculpture comprenant une pluralité de rainures principales (15, 16) formées sur chaque moitié de la bande de roulement de part et d'autre d'un plan médian X-X', chacune de ces rainures principales (15, 16) de largeur moyenne L s'ouvrant axialement à l'extérieur et se prolongeant axialement à l'intérieur jusqu'à une distance du plan médian X-X' comprise entre 2.5 et 10% de la largeur TW de la bande de roulement, ces rainures principales formant un motif de forme générale en V conférant à cette bande de roulement un sens de roulement préférentiel tel que l'extrémité axialement la plus à l'intérieur de chaque rainure principale (15, 16) rentre dans le contact avec la chaussée avant l'extrémité axialement la plus à l'extérieur de la même rainure principale,
cette bande de roulement comprenant en outre une pluralité de rainures additionnelles (20), chacune de ces rainures additionnelles (20) ayant une largeur 1 inférieure à la largeur moyenne L des rainures principales et comprenant une première et une seconde extrémités (21, 22),
la direction moyenne reliant les première et seconde extrémités des rainures additionnelles (20) formant avec la direction circonférentielle un angle A faible supérieur à zéro degré et au plus égal à 20 degrés, la seconde extrémité (22) étant située à une distance D2 du plan médian X-X' qui est supérieure à la distance D1 au même plan de la première extrémité (21), la première extrémité étant ouverte sur une rainure principale la première extrémité (21), c'est-à-dire l'extrémité axialement intérieure (21) de chaque rainure additionnelle (20) qui est la plus proche du plan médian X-X' - étant à une distance D1 du plan équatorial qui est supérieure à la distance D0 par rapport au même plan des premières extrémités des rainures principales, cette distance D1 étant inférieure à 18% de la largeur TW de la bande de roulement, cette bande de roulement étant **caractérisée en ce que**
la seconde extrémité (22) des rainures additionnelles (20) est située, par rapport à une rainure principale, à une distance H non nulle et au plus égale à 20% de la distance D3 séparant deux rainures principales consécutives dans la direction de la rainure additionnelle, **en ce que** les rainures principales et les rainures additionnelles délimitent une partie médiane s'étendant dans la direction circonférentielle et ayant des bords axialement opposés délimitant une pluralité d'épis, **en ce que**
sur chaque rainure principale (15, 16) débouche au moins une rainure additionnelle et **en ce que** l'extrémité axialement la plus à l'intérieur (21) de chaque rainure additionnelle (20) rentre dans le contact avec la chaussée avant l'extrémité axialement la plus à l'extérieur (22) de la même rainure additionnelle,
cette bande de roulement étant en outre **caractérisée en ce que** la partie médiane comprenant une pluralité d'épis est dépourvue de toute rainure circonférentielle.

6. Bande de roulement selon la revendication 5 **caractérisée en ce que** la pluralité des rainures principales (15) formées sur une moitié de la bande de roulement est décalée circonférentiellement par rapport à la pluralité des rainures principales (16) formées sur l'autre moitié de la bande de roulement.

7. Bande de roulement selon l'une des revendications 5 ou 6 **caractérisée en ce que** l'angle A des rainures additionnelles (20) avec la direction circonférentielle est au moins égal à 4 degrés et au plus égal à 15 degrés.

8. Bande de roulement selon l'une quelconque des revendications 5 à 7 **caractérisée en ce qu'**elle comprend en outre des rainures obliques (40) reliant les rainures principales (15) d'une moitié de bande de roulement aux rainures principales (16) de l'autre moitié de bande de roulement, chacune desdites rainures obliques (40) étant pourvues, sur les faces en vis-à-vis les délimitant, de protubérances (41) empêchant la fermeture desdites rainures en freinage.

## Claims

1. Tread for a tyre provided with a pattern comprising a plurality of main grooves (15, 16) formed on each half of the tread on each side of a median plane X-X', each of these main grooves (15, 16), of mean width L, opening axially to the outside and extending axially inward as far as a distance from the median plane X-X' that is comprised between 2.5 and 10% of the width TW of the tread, these main grooves forming a pattern of V-shaped overall appearance and giving this tread a preferred direction of running such that the axially innermost end of each main groove (15, 16) comes into contact with the road surface before the axially outermost end of the same main groove,
this tread further comprising a plurality of additional grooves (20), each of these additional grooves (20) having a width 1 less than the mean width L of the main grooves and comprising a first and a second end (21, 22), the additional grooves (20) opening at both ends (21, 22) into main grooves,
the mean direction connecting the first and second ends of the additional grooves (20) forming, with the circumferential direction, a small angle A greater than zero degrees and at most equal to 20 degrees, the second end (22) being situated at a distance D2 from the median plane X-X' which is greater than the distance D1 between that same plane and the first end (21), the first end (21) that is to say the axially inner end (21) of each additional groove (20) which is the end closest to the median plane X-X'- being a distance D1 away from the equatorial plane which is greater than the distance D0 away from that same plane of the first ends of the main grooves, this distance D1 being less than 18% of the width TW of the tread,
the main grooves and the additional grooves delimiting a median part which extending in the circumferential direction and having axially opposite ends delimiting a plurality of wheat-like ears,
this tread being such that opening onto each main groove (15, 16) is at least one additional groove, the axially innermost end (21) of each additional groove (20) comes into contact with the road surface before the axially outermost end (22) of the same additional groove,
this tread being **characterized in that** the median part comprising a plurality of wheat-like ears is devoid of any circumferential groove.

2. Tread according to Claim 1, **characterized in that** the plurality of main grooves (15) formed on one half of the tread is circumferentially offset by comparison with the plurality of main grooves (16) formed on the other half of the tread.

3. Tread according to any one of Claims 1 to 2, **characterized in that** the angle A that the additional grooves (20) make with the circumferential direction is at least equal to 4 degrees and at most equal to 15 degrees.

4. Tread according to any one of Claims 1 to 3, **characterized in that** it further comprises oblique grooves (40) connecting the main grooves (15) of one half of the tread to the main grooves (16) of the other half of the tread, each of the said oblique grooves (40) being provided, on the opposing faces that delimit them, with projections (41) that prevent the said grooves from closing up under braking.

5. Tread for a tyre provided with a pattern comprising a plurality of main grooves (15, 16) formed on each half of the tread on each side of a median plane X-X', each of these main grooves (15, 16), of mean width L, opening axially to the outside and extending axially inward as far as a distance from the median plane X-X' that is comprised between 2.5 and 10% of the width TW of the tread, these main grooves forming a pattern of V-shaped overall appearance and giving this tread a preferred direction of running such that the axially innermost end of each main groove (15, 16) comes into contact with the road surface before the axially outermost end of the same main groove,
this tread further comprising a plurality of additional grooves (20), each of these additional grooves (20) having a width 1 less than the mean width L of the main grooves and comprising a first and a second end (21, 22),
the mean direction connecting the first and second ends of the additional grooves (20) forming, with the circumferential direction, a small angle A greater than zero degrees and at most equal to 20 degrees, the second end (22) being situated at a distance D2 from the median plane X-X' which is greater than the distance D1 between that same plane and the first end (21), the first end (21) that is to say the axially inner end (21) of each additional groove (20) which is the end closest to the median plane X-X' - being a distance D1 away from the equatorial plane which is greater than the distance D0 away from that same plane of the first ends of the main grooves, this distance D1 being less than 18% of the width TW of the tread,
this tread being **characterized in that** the second end (22) of the additional grooves (20) is located, relative to a main groove, at a distance H greater than zero and less than 20% of the distance D3 between two following main grooves in the direction of the additional groove,
**in that** the main grooves and the additional grooves delimiting a median part which extending in the circumferential direction and having axially opposite ends delimiting a plurality of wheat-like ears,
**in that** opening onto each main groove (15, 16) is at least one additional groove and **in that** the axially innermost end (21) of each additional groove (20) comes into contact with the road surface before the axially outermost end (22) of the same additional groove,
this tread being further **characterized in that** the median part comprising a plurality of wheat-like ears is devoid of any circumferential groove.

6. Tread according to Claim 5, **characterized in that** the plurality of main grooves (15) formed on one half of the tread is circumferentially offset by comparison with the plurality of main grooves (16) formed on the other half of the tread.

7. Tread according to any one of Claims 5 to 6, **characterized in that** the angle A that the additional grooves (20) make with the circumferential direction is at least equal to 4 degrees and at most equal to 15 degrees.

8. Tread according to any one of Claims 5 to 7, **characterized in that** it further comprises oblique grooves (40) connecting the main grooves (15) of one half of the tread to the main grooves (16) of the other half of the tread, each of the said oblique grooves (40) being provided, on the opposing faces that delimit them, with projections (41) that prevent the said grooves from closing up under braking.

## Patentansprüche

1. Laufstreifen für einen Reifen, der mit einem Profil versehen ist, das eine Vielzahl von Hauptrillen (15, 16) enthält, die auf jeder Hälfte des Laufstreifens zu beiden Seiten einer Mittelebene X-X' geformt sind, wobei jede dieser Hauptrillen (15, 16) einer mittleren Breite L sich axial nach außen öffnet und nach innen bis zu einem Abstand von der Mittelebene X-X' verlängert, der zwischen 2,5 und 10% der Breite TW des Laufstreifens liegt, wobei diese Hauptrillen ein Muster einer allgemeinen V-Form formen, das diesem Laufstreifen eine bevorzugte Rollrichtung verleiht, derart, dass das axial am weitesten innen liegende Ende jeder Hauptrille (15, 16) vor dem axial am weitesten außen liegenden Ende der gleichen Hauptrille mit der Straße in Kontakt kommt,
wobei dieser Laufstreifen außerdem eine Vielzahl von Zusatzrillen (20) enthält, wobei jede dieser Zusatzrillen (20) eine Breite 1 geringer als die mittlere Breite L der Hauptrillen hat und ein erstes und ein zweites Ende (21, 22) enthält, wobei die Zusatzrillen (20) an ihren zwei Enden (21, 22) in Hauptrillen münden,
wobei die das erste und das zweite Ende der Zusatzrillen (20) verbindende mittlere Richtung mit der Umfangsrichtung einen kleinen Winkel A größer als null Grad und höchstens gleich 20 Grad bildet, wobei das zweite Ende (22) sich in einem Abstand D2 von der Mittelebene X-X' befindet, der größer ist als der Abstand D1 des ersten Endes (21) zu der gleichen Ebene, wobei das erste Ende (21), d.h. das axial innere Ende (21) jeder Zusatzrille (20), das der Mittelebene X-X' am nächsten ist, sich in einem Abstand D1 von der Äquatorialebene befindet, der größer ist als der Abstand D0 bezüglich dergleichen Ebene der ersten Enden der Hauptrillen, wobei dieser Abstand D1 geringer als 18% der Breite TW des Laufstreifens ist,
wobei die Hauptrillen und die Zusatzrillen einen sich in der Umfangsrichtung erstreckenden Mittelbereich begrenzen, der axial gegenüberliegende Ränder hat, die eine Vielzahl von Schrägen begrenzen,
wobei dieser Laufstreifen so ist, dass an jeder Hauptrille (15, 16) mindestens eine Zusatzrille mündet, wobei das axial am weitesten innen liegende Ende (21) jeder Zusatzrille (20) vor dem axial am weitesten außen liegenden Ende (22) der gleichen Zusatzrille mit der Straße in Kontakt kommt,
wobei dieser Laufstreifen **dadurch gekennzeichnet ist, dass** der eine Vielzahl von Schrägen enthaltende mittlere Bereich keine Umfangsrille aufweist.

2. Laufstreifen nach Anspruch 1, **dadurch gekennzeichnet, dass** die auf einer Hälfte des Laufstreifens geformte Vielzahl von Hauptrillen (15) in Umfangsrichtung bezüglich der auf der anderen Hälfte des Laufstreifens geformten Vielzahl von Hauptrillen (16) versetzt ist.

3. Laufstreifen nach einem der Ansprüche 1 oder 2, **dadurch gekennzeichnet, dass** der Winkel A der Zusatzrillen (20) mit der Umfangsrichtung mindestens gleich 4 Grad und höchstens gleich 15 Grad ist.

4. Laufstreifen nach einem der Ansprüche 1 bis 3, **dadurch gekennzeichnet, dass** er außerdem schrägliegende Rillen (40) enthält, die die Hauptrillen (15) einer Hälfte des Laufstreifens mit den Hauptrillen (16) der anderen Hälfte des Laufstreifens verbinden, wobei jede der schrägliegenden Rillen (40) auf den sie begrenzenden, einander gegenüberliegenden Seiten mit Vorsprüngen (41) versehen ist, die das Schließen der Rillen beim Bremsen verhindern.

5. Laufstreifen für einen Luftreifen, der mit einem Profil versehen ist, das eine Vielzahl von Hauptrillen (15, 16) enthält, die auf jeder Hälfte des Laufstreifens zu beiden Seiten einer Mittelebene X-X' geformt sind, wobei jede dieser Hauptrillen (15, 16) einer mittleren Breite L sich axial nach außen öffnet und sich axial nach innen bis zu einem Abstand von der Mittelebene X-X' verlängert, der wischen 2,5 und 10% der Breite TW des Laufstreifens liegt, wobei diese Hauptrillen ein Muster einer allgemeinen V-Form formen, das diesem Laufstreifen eine bevorzugte Rollrichtung verleiht, derart, dass das axial am weitesten innen liegende Ende jeder Hauptrille (15, 16) vor dem axial am weitesten außen liegenden Ende der gleichen Hauptrille mit der Straße in Kontakt kommt,
wobei dieser Laufstreifen außerdem eine Vielzahl von Zusatzrillen (20) enthält, wobei jede dieser Zusatzrillen (20) eine Breite 1 geringer als die mittlere Breite L der Hauptrillen hat und ein erstes und ein zweites Ende (21, 22) enthält, wobei die das erste und das zweite Ende der Zusatzrillen (20) verbindende mittlere Richtung mit der Umfangsrichtung einen kleinen Winkel A größer als null Grad und höchstens gleich 20 Grad bildet, wobei das zweite Ende (22) sich in einem Abstand D2 von der Mittelebene X-X' befindet, der größer ist als der Abstand D1 des ersten Endes (21) zu der gleichen Ebene, wobei das erste Ende zu einer Hauptrille offen ist, wobei das erste Ende (21), d.h. das axial innere Ende (21) jeder Zusatzrille (20), das der Mittelebene X-X' am nächsten liegt, sich in einem Abstand D1 von der Äquatorialebene befindet, der größer ist als der Abstand D0 der ersten Enden der Hauptrillen bezüglich der gleichen Ebene, wobei dieser Abstand D1 geringer als 18% der Breite TW des Laufstreifens ist,
wobei dieser Laufstreifen **dadurch gekennzeichnet ist, dass**
das zweite Ende (22) der Zusatzrillen (20) sich bezüglich einer Hauptrille in einem Abstand H ungleich Null und höchstens gleich 20% des zwei aufeinanderfolgende Hauptrillen in der Richtung der Zusatzrille trennenden Abstands D3 befindet, dass
die Hauptrillen und die Zusatzrillen einen mittleren Bereich begrenzen, der sich in der Umfangsrichtung erstreckt und axial gegenüberliegende Ränder hat, die eine Vielzahl von Schrägen begrenzen, dass
an jeder Hauptrille (15, 16) mindestens eine Zusatzrille mündet, und dass das axial am weitesten innen liegende Ende (21) jeder Zusatzrille (20) vor dem axial am weitesten außen liegenden Ende (22) der gleichen Zusatzrille mit der Straße in Kontakt kommt,
wobei dieser Laufstreifen außerdem **dadurch gekennzeichnet ist, dass** der eine Vielzahl von Schrägen enthaltende mittlere Bereich keine Umfangsrille aufweist.

6. Laufstreifen nach Anspruch 5, **dadurch gekennzeichnet, dass** die auf einer Hälfte des Laufstreifens geformte Vielzahl von Hauptrillen (15) in Umfangsrichtung bezüglich der auf der anderen Hälfte des Laufstreifens geformten Vielzahl von Hauptrillen (16) versetzt ist.

7. Laufstreifen nach einem der Ansprüche 5 oder 6, **dadurch gekennzeichnet, dass** der Winkel A der Zusatzrillen (20) mit der Umfangsrichtung mindestens gleich 4 Grad und höchstens gleich 15 Grad ist.

8. Laufstreifen nach einem der Ansprüche 5 bis 7, **dadurch gekennzeichnet, dass** er außerdem schrägliegende Rillen (40) enthält, die die Hauptrillen (15) einer Laufstreifenhälfte mit den Hauptrillen (16) der anderen Laufstreifenhälfte verbinden, wobei jede der schrägliegenden Rillen (40) auf den sie begrenzenden, einander gegenüberliegenden Seiten mit Vorsprüngen (41) versehen ist, die das Schließen der Rillen beim Bremsen verhindern.
